# EUROPEAN PATENT SPECIFICATION

(11) **EP 3 919 793 B1**
(45) Date of publication and mention of the grant of the patent: **18.03.2026**
(21) Application number: 21177768.5
(22) Date of filing: 04.06.2021
(51) Int. Cl.: G01F 15/00, F16K 37/00, F16K 31/04, F16K 5/06

(54) **METHOD FOR CONTROLLING A VALVE**
VERFAHREN ZUR STEUERUNG EINES VENTILS
PROCÉDÉ DE COMMANDE D'UNE SOUPAPE

(30) Priority: 05.06.2020 IT 202000013348
(43) Date of publication of application: 08.12.2021
(73) Proprietor: Pietro Fiorentini S.p.A., 36057 Arcugnano (VI) (IT)
(72) Inventor: MEME', Lorenzo, 20088 ROSATE (MI) (IT); BARENGHI, Franco, 20088 ROSATE (MI) (IT)
(74) Representative: Braidotti, Andrea

(56) References cited:
- EP-A2- 1 832 816
- WO-A1-2020/026188
- US-A1- 2015 107 675
- US-A1- 2020 072 892

## Description

The present invention relates to a method for controlling a valve and, in particular, for detecting/verifying the position and/or condition of the shutter of said valve. In particular, the valve is a solenoid valve of the type suitable to be used and housed inside the casing of a gas meter to intercept, at least in part, the gas flow at the inlet and/or outlet. of the gas in/from said meter.

At present, a gas flow shut-off solenoid valve is generally provided inside the casing of a gas meter and in correspondence with its inlet section, a solenoid valve that is suitably chosen and sized according to the maximum gas flow rate managed by the meter itself. Conveniently, this solenoid valve serves to intercept the flow of gas to the outlet for commercial and service purposes only, in particular to interrupt, at the discretion of the distributor and by local or remote control, the supply of gas, for example in the case of default by the user.

Currently, the control of the shutter position of the gas flow shut-off solenoid valve in a gas meter is either not provided or, if provided, it is carried out through the use of encoders or through the use of electromechanical limit switches, configured to detect/signal that the shutter has reached an open/closed end position.

Generally, at present, it is not possible to detect/verify if the shutter has encountered an obstacle during its movement, except by carrying out indirect measurements and correlating the closing/opening times with the limit switch signals.

Conveniently, the use of the limit switches makes it possible to detect in a simple way that the shutter reaches the two extreme positions of its movement, however it entails an undesirable increase in costs and in the relative dimensions. In fact, in addition to the cost of the limit switch devices, in fact, it is also necessary to provide suitable wiring to connect the limit switches to the control unit. Furthermore, since the valve with the limit switches is housed inside a sealed compartment (due to the presence of gas), the increase in the number of wiring to be brought outside, makes it more difficult to obtain the seal or, in the case of a single flat cable, requires more space and an increase in the cost of the valve itself.

To avoid the use of limit switches, it is necessary to use a firmware that controls the movement of the valve plug for a predefined time interval (or for a predefined number of steps, in the case of stepper motors), starting from a note starting position of the shutter. In particular, the shutter movement control firmware assumes/estimates that, for each instant of time of the predefined time interval, the shutter itself is in a well-defined position.

It is evident that if the movement commands, which are sent to the shutter in a predefined time interval, are not aligned with the actual/real position of the shutter itself, the system becomes unstable and does not guarantee correct operation. This problem could arise, for example, due to unforeseen circumstances that hinder the movement of the shutter by slowing or blocking its stroke, or due to malfunctions of the gears of the shutter movement gearmotor. More in detail, the aforementioned unforeseen circumstances may be due to mechanical deformations deriving from changes in temperature, or to unexpected operating pressure or even to mechanical obstacles.

The misalignment between the estimated position and the actual/real position of the shutter can also be generated due to an unexpected restart of the control firmware when the estimated position of the shutter itself has not yet been updated in the non-volatile memory of the unit control.

WO2020/026188, US2015/107675 and US2020/072892 describe solutions in which to check the condition of the valve shutter the electric current absorption by the actuator for moving the shutter is used.

The object of the invention is to propose a method for controlling a valve and, in particular, for detecting/checking the position and/or condition of its shutter, which allows to overcome - at least in part - the drawbacks of the known solutions.

Another object of the invention is to propose a method for detecting/verifying the correct movement of the valve shutter during the opening/closing of the valve itself.

Another object of the invention is to propose a method for controlling a valve which can be implemented in a simple, quick and low-cost manner.

Another object of the invention is to propose a method which is suitable for detecting the position of the shutter of a valve which is housed inside a sealed compartment, such as in particular the casing of a gas meter.

Another purpose of the invention is to propose a method that uses electronic components already available at present, thus avoiding their new and/or dedicated production.

Another object of the invention is to propose a method which provides a highly precise and reliable indication of the condition and/or position of the valve shutter.

Another object of the invention is to propose a method which provides a precise indication of the condition and/or position of the valve shutter even in the presence of unforeseen circumstances which hinder, blocking or slowing down, the movement of the shutter itself.

Another object of the invention is to propose a method that provides an indication of the condition/position of the valve shutter, to be used to thus control said valve in feedback or to control correspondingly other members or devices.

Another object of the invention is to propose a method which can be used to control valves already available at present.

Another object of the invention is to propose a method which is an improvement and/or alternative to traditional solutions.

Another object of the invention is to propose a method with an alternative characterization, both in functional and implementation terms, with respect to the traditional ones.

Another object of the invention is to propose a gas meter incorporating a valve whose shutter position is detected in a precise and reliable way, with reduced costs and without requiring the installation of additional or dedicated hardware components.

Another object of the invention is to propose software for controlling a valve incorporated in a gas meter.

Another object of the invention is to propose software for controlling a valve incorporated in a gas meter that can be updated without having to uninstall the gas meter.

All the purposes mentioned here, considered both individually and in any combination thereof, and others that will result from the following description, are achieved, according to the invention, with a method as defined in claim 1 and with an electronic apparatus as defined in claim 7.

The present invention is further clarified hereinafter in some of its preferred embodiments reported for purely illustrative and non-limiting purposes with reference to the attached drawings, in which:
- Figure 1: shows a perspective view of a gas meter inside of which a valve controllable with the method according to the invention is inserted/housed,
- Figure 2: shows in schematic view an electronic apparatus, installed in the meter, for controlling the valve of fig. 1,
- Figure 3: shows the trend (ie the variation of the amplitude over time) of the current actually absorbed by the movement actuator by the valve shutter during the opening of the valve itself,

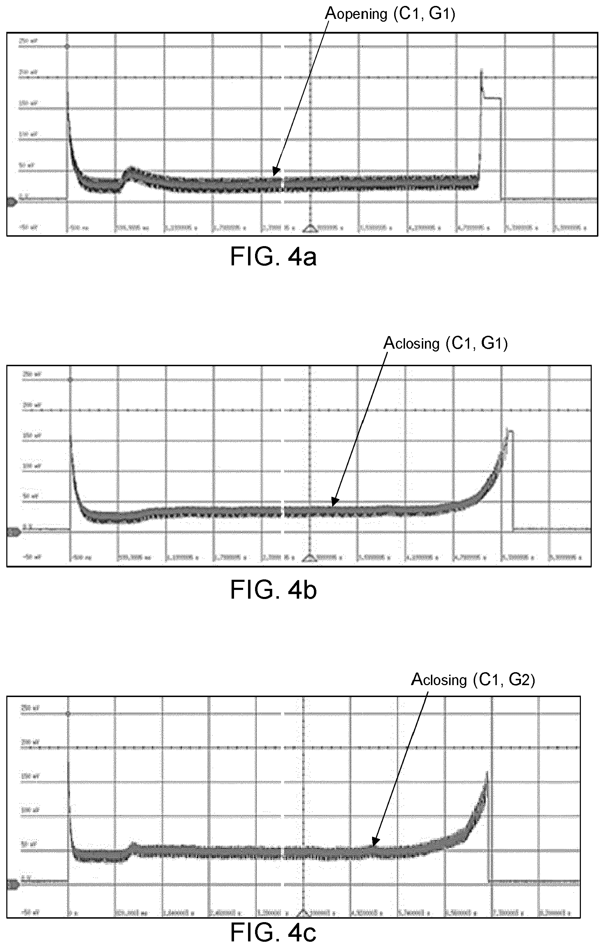

- Figure 4a: shows the trend A in the time of the absorbed current for a first type of valve with characterization C₁, during the opening movement and at a first operating condition G₁ (at a gas temperature of 55°C),
- Figure 4b: shows the trend A over time of the current absorbed for the same type of valve as in fig. 4a, with characterization C₁, during the closing movement and at a first operating condition G₁ (at gas temperature of 55°C),
- Figure 4c: shows the trend A over time of the absorbed current for the same type of valve of fig. 4a, with characterization C₁, during the closing movement and at a second operating condition G₂ (at gas temperature of -25°C),

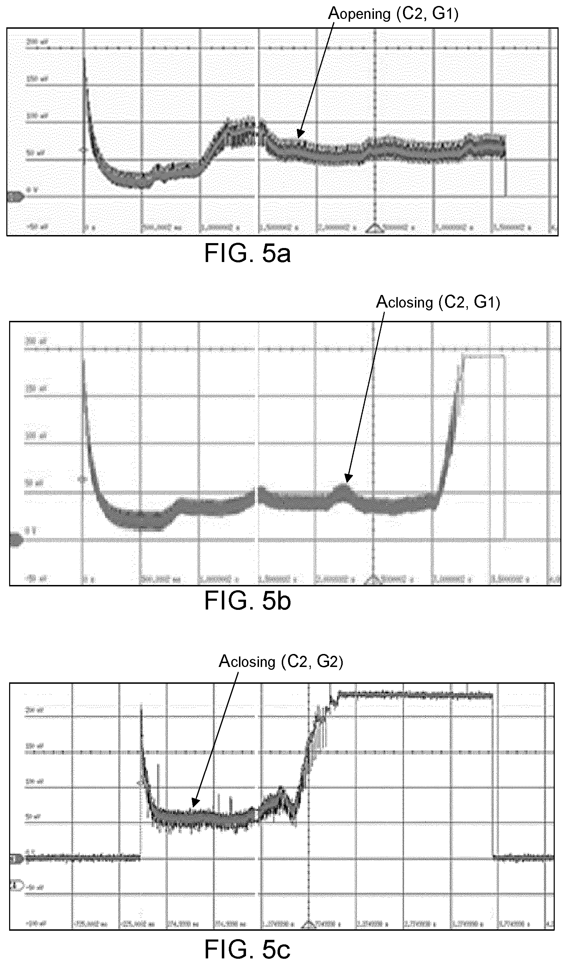

- Figure 5a: shows the trend A over time of the absorbed current for a second type of valve with characterization C₂ during opening movement and at a first operating condition G₁ (at gas temperature of 55°C),
- Figure 5b: shows the trend A over time of the absorbed current for the same type of valve as in fig. 5a, with characterization C₂, during the closing movement and at a first operating condition G₁ (at gas temperature of 55°C), and
- Figure 5c: shows the trend A over time of the absorbed current for the same type of valve of fig. 5a, with characterization C₂, in a second operating condition G₂ (at gas temperature of -25°C) and during an anomalous/unsuccessful closing movement.

The present invention relates to a method for controlling a valve 1 and, in particular, for detecting/checking the position, condition and/or movement of its shutter 11, preferably during the opening/closing of the valve itself. In particular, said valve 1 is a solenoid valve of the type suitable to be used and housed inside the casing 2 of a gas meter 3 to thus intercept, at least in part, the gas flow at the inlet and/or of the gas outlet in/from said meter.

In particular, the gas meter 3 is of the conventional type and is of the type configured to perform a series of measurements on the gas that passes through said meter. Preferably, the gas meter 3 is of the type generally used as a meter or meter for the flow of gas which passes through the section of a pipe on which said appliance is installed.

Conveniently, the meter 3 is provided with a containment casing 2 provided with a gas inlet 5 and a gas outlet 4.

Preferably, in the containment casing 2 the following are defined and/or mounted:
- an inlet connection 7 which is fluidically connectable with an upstream pipe external to the meter 3,
- an outlet connection 6 which is fluidically connectable to a downstream pipe external to the meter 3.

Conveniently, the meter 3 can be provided with a gas inlet section which is housed, at least in part, inside the containment casing 2 and which is fluidically connected to the inlet connection 7 to allow the gas to enter the casing 2.

Conveniently, the meter 3 can be provided with a gas outlet connection 8 which is housed, at least in part, inside the containment casing 2 and which is fluidly connected with the outlet connection 6 to thus allow the gas to exit from the containment casing 2 of the meter.

Conveniently, inlet 5 is in fluidic connection with inlet connection 7 and/or with an inlet cup. Conveniently, the outlet 4 is in fluidic connection with the outlet connection 6 and/or with the outlet connection 8.

Conveniently, the containment casing 2 is watertight to prevent the escape of gas to the outside. Preferably, it is made up of two or more parts (for example half-shells) joined together so as to guarantee the hermetic seal of the entire casing. Preferably, the containment casing 2 is made of metal, in particular of metal sheet.

The meter 3 comprises a measurement module, indicated as a whole with the reference number 10, which is housed inside the containment casing 2, in particular it is housed inside the chamber delimited by the internal walls of said casing 2. Conveniently, the measurement module 10 is of the conventional type and comprises at least one sensor, preferably a plurality of sensors which are configured to detect corresponding quantities of the gas flow entering and passing through the meter 3. Preferably, the sensors comprise a corresponding sensor for detecting the flow rate and/or pressure and/or temperature of the gas entering and/or passing through the meter 3. The sensor or sensors are traditional in themselves and, therefore, will not be described further.

Advantageously, the sensor of the measurement module 10 can comprise a flow sensor of the membrane type which comprises a traditional mechanical system (for example comprising a crank mechanism connected to a pin) which is preferably associated with a system (for example with optical sensors and encoders) for detection and conversion into electronic pulses; in particular, the mechanical system alone or both of said systems can be provided inside the casing 2 and, moreover, suitably, the detection and conversion system can be connected to a corresponding electronic calculation and management which is provided outside of the casing 2 of the meter 3.

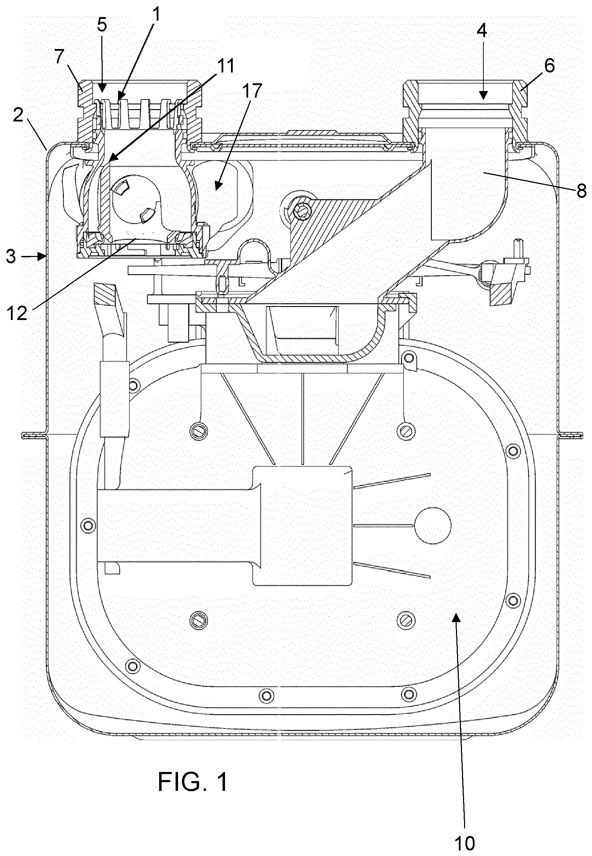

Conveniently, a valve 1 is housed inside the casing 2 which acts in a section which is in fluidic connection with the gas inlet 5 inside the meter 3 (see fig. 1) and/or with the gas outlet 4 from the meter 3, to thus regulate/choke the passage of the gas that enters and/or exits from the casing 2 of the meter 3. Preferably, the valve, housed inside the casing 2 of the meter 3, can be connected in a sealed manner with the gas inlet 5 and/or with the gas outlet 4.

In particular, the valve 1 can be installed in correspondence with the inlet connection 7 to thus regulate the passage of the gas which from the inlet 5 of the meter 3 enters the chamber defined inside the casing 2. Conveniently, in a non represented, the valve 1 can be installed in the attack outlet end 6 and/or of the outlet connection 8 to adjust so that the passage of gas from the chamber defined within the casing protrudes from the meter 3.
in essence, the valve 1 according to the invention intercepts and regulates/chokes - preferably in on-off mode - at the inlet and/or outlet of the meter 3, the flow of gas that passes through the internal chamber of the meter itself and/or that comes out of it. last towards the outside of the meter.

Preferably, the valve 1 can be a conventional shut-off valve which is provided in a gas meter. In particular, the valve 1 is two-way, that is, with an inlet and an outlet. Conveniently, the valve 1 is a solenoid valve.

Conveniently, the valve 1 serves to intercept the flow of gas towards the outlet for commercial and service purposes, and in particular to interrupt, at the discretion of the distributor and by local or remote control, the supply of gas, for example in the event of of arrears of the user. Advantageously, the valve 1 can be provided to interrupt the supply of gas in cases of danger, such as earthquakes or fires.

In particular, as mentioned, the valve 1 comprises an shutter 11 whose movement allows/prevents and/or regulates/partializes the flow of the gas which passes through the passage section 12 of the valve itself. In particular, the movement of the shutter is controlled by an actuator 17, which is configured to move the shutter 11 of the valve 1 itself, and thus cause the opening/closing of the corresponding valve 1. Conveniently, the actuator 17 can be electric or electromechanical. Preferably, the actuator 17 can be a solenoid or a motor, preferably a direct current motor.

More in detail, the valve 1 can therefore conveniently assume a closed condition in which the shutter 11 of the valve prevents the gas from passing through the passage section 12 of the valve itself, and at least one opening condition in which the gas passes through the passage section 12 of the valve itself. In particular, the actuator 17 of the valve 1 is able to move the corresponding shutter 11 of the valve 1 between a closing position of the passage section 12 of the valve itself, and at least one opening position of the passage section 12 of said valve.

Advantageously, in a possible embodiment, the valve 1 can be of the "on/off" type (ie with fixed flow rate), and in particular it can be configured to stably assume only a condition of complete closure of the passage section 12 and a condition of complete opening of said passage section, ie without being able to stably assume one or more intermediate partial opening positions of the passage section.

Advantageously, in another possible embodiment, said valve 1 can be configured to also stably assume one or more intermediate conditions of partial opening of the passage section 12, thus allowing to regulate the passage lumen and therefore to regulate/partialize the scope.

The valve 1 is electronically connected and controlled in opening/closing by an electronic apparatus 20. In particular, the electronic apparatus 20 is electronically connected with the actuator 17 of the valve to control the movement of the shutter 11, and therefore the opening/closing of the corresponding valve.

Conveniently, the electronic apparatus 20 comprises an electronic processing and control unit 21 which is configured to control and time the opening/closing of the valve 1.

Conveniently, the electronic apparatus 20 also comprises a power supply unit 19 to supply the electric energy (driving current) for opening and closing each valve 1.

Conveniently, the electronic apparatus 20 comprises an electronic circuit 24 - preferably defined in an electronic board (in particular in a first printed circuit) - on the which the electronic processing and control unit 21 is mounted/connected and on which the power supply unit 19 is mounted/connected.

Conveniently, the electronic processing and control unit 21 comprises a processor which is provided with and/or associated to a memory area. Preferably, the processing and control unit 21 can be a microprocessor, or a microcontroller, or a CPU. Advantageously, said electronic processing and control unit 21 is electronically connected with the other modules (for example the measurement module and/or the communication module) of the meter 3 and/or of the electronic apparatus 20 or of the electronic circuit 24 of the meter 3.

Conveniently, the electronic circuit 24 is connected at the output to the two terminals 32' and 32' (positive and negative) of the actuator 17 of the valve 1. Preferably, the electronic circuit 24 can be a flexible printed circuit (FPC). Furthermore, conveniently, the two terminals 32' and 32" of the actuator 17 of the valve 1 are connected - advantageously by means of corresponding electrical cables associated with the electronic circuit 24 - with two electrical contacts 33' and 33" connected to the power supply unit 19 and to the electronic processing and control unit 21.

Conveniently, the electronic circuit 24 is configured - for example by providing an "H bridge" circuit 34 - to invert the polarity at the two contacts 33' and 33" connected to power supply unit 19, and thus allowing the actuator 17 of the valve 1 to be moved in two opposite directions (in particular to allow the motor to rotate in both directions, both clockwise and anticlockwise). Preferably, the command for reversing the polarity at the two electrical contacts 33' and 33" is sent by the control unit 21.

Conveniently, the power supply unit 19 comprises a battery pack which, preferably, is the same as provided for the power supply of the measurement module 10, but it could also be the one provided for the power supply of the communication module provided in the meter. More in detail, the power supply unit 19 can comprise two batteries, one specific for the communication module and the other to power the processing and control unit 21, and suitably both the batteries can be used to move the valve. 1.

Preferably, a temperature sensor 23 is also provided which detects the gas temperature and sends the corresponding detection signals to the electronic processing and control unit 21. Conveniently, the temperature sensor 23 can be mounted on the valve 1 or on another duct/area of passage of the gas inside the meter 3 and is electronically connected to the electronic apparatus 20, in order to send the corresponding signals detected and representative of the gas temperature to the electronic processing and control unit 21.

The electronic apparatus 20 is configured in such a way as to pilot/control the opening/closing of the valve 1 - and in particular so as to control the actuator 17 which moves the respective shutter 11, to thus cause the opening or closing of the corresponding passage section 12 of said valve - absorbing/requiring, in a determined time interval, a certain driving current (and therefore of energy/electric power), according to a determined trend.

The method according to the invention provides to control the valve 1 and, in particular, to detect/verify the condition and/or position of its shutter 11 - and preferably also the movement of the latter during an opening/closing cycle of the valve itself - on the basis of the electric current absorbed by the actuator 17 which causes the movement of said shutter 11 of the valve. Conveniently, hereinafter reference will mainly be made to the absorption of electric current, however it is understood that the electric power absorbed by the actuator 17 which causes the movement of the shutter 11 of the valve can be detected.

Conveniently, the method according to the invention provides for monitoring the current/electrical power absorption by the actuator 17 which causes the movement of the shutter 11 of the valve 1.

Conveniently, the method according to the invention provides for:
- detecting, preferably during an opening/closing cycle of the valve, the electric current absorbed by the actuator 17 which causes the movement of the shutter 11 of the valve 1,
- using the absorbed electric current, thus detected, to determine the condition and/or position in which said shutter 11 is located, and therefore in which condition and/or opening/closing position the valve itself is.

Conveniently, in substance, this method provides for measuring and quantifying the current I absorbed by the actuator 17 for moving the shutter 11 during an opening/closing cycle of the valve 1, and to correlate the current value thus quantified with the condition and/or position of the shutter 11 of the valve 1.

Advantageously, this correlation between the current absorbed by the actuator 17 and the condition and/or position of the shutter 11 of the valve 1 is carried out by comparing the detected/calculated values of the absorbed current with the default value of at least one control parameter, preferably of a series of control parameters relating to the absorbed current.

Conveniently, the predefined values of said control parameters relating to the absorbed current are obtained during/by means of at least one control/test opening/closing cycle which is carried out, preferably in the laboratory, under known and predefined conditions on a valve of the same type, which is thus used as a reference.

Preferably, the method according to the invention provides for using the electric current absorbed by the actuator 17 for moving the shutter 11 to determine whether the latter has reached a limit switch position in opening or closing, that is, if it is respectively in a position of complete opening of the passage section 12 or in a position of complete closure of the passage section 12. In particular, for this purpose, the absorbed electric current is compared with a predefined threshold value, ie I_{LIMIT SWITCHES}.

Conveniently, the current absorbed I by the actuator 17 is detected/acquired according to a predefined sampling time and, therefore, the processing and control unit 21 receives a temporal sequence of current values Iₙ.

Conveniently, to determine the condition and/or position in which said shutter 11 is located, and therefore in which opening/closing condition the valve itself is, a series of relative and/or calculated values are used starting from the width of the valve of current/electrical power absorbed over time, such as for example the peaks in the amplitude of the current, the rate of rise of the peaks, the duration of a certain time interval during which the amplitude of the current is substantially constant.

Conveniently, the method according to the invention also provides for:
- detect the time elapsed from the start of the shutter movement 11,
- use the elapsed time, thus detected, to determine the condition and/or position in which said shutter 11 is found, and therefore in which condition and/or position of opening/closing the valve itself is.

Conveniently, in substance, this method provides for measuring and quantifying, in particular during an opening/closing cycle of the valve 1, the time interval elapsed from the beginning of the movement of the shutter 11, and to correlate the time thus quantified with the condition and/or position of the valve 1.

Advantageously, this correlation between the movement times of the shutter 11 (and in particular of the duration of the time intervals into which the movement of the shutter 11 can be divided) and the condition and/or position of the shutter 11 of the valve 1 is carried out by comparing the detected/calculated values of the time elapsed from the beginning of the movement of the shutter 11 with the predefined value of at least one control parameter, preferably of a series of control parameters, relative/i to the shutter 11 movement time.

Conveniently, the predefined values of said control parameters relating to the movement times one of the shutter 11 are obtained during/by means of at least one full opening/closing control/test cycle which is carried out, preferably in the laboratory, under known and predefined conditions on a valve of the same type which is used as a reference.

Preferably, the method according to the invention provides for using the movement times of the shutter 11 (and in particular the time elapsed from the beginning of its movement), in combination with the electric current absorbed by the actuator 17, to determine whether the shutter 11 has reached a limit switch position in opening or closing, and if shutter 11 has encountered an obstacle during its movement stroke in opening or closing, or if this movement is in some way slowed down. In particular, for example, if the electric current absorbed by the actuator 17 is equal to or greater than the limit switch value (ie the limit switch) while the time elapsed from the beginning of the movement of the shutter 11 is less than that foreseen for its movement fully open/closed, then it means that the shutter has encountered an obstacle.

Conveniently, in a preferred and possible embodiment, the method according to the invention provides to use as a control parameter for the time a single and only value which corresponds to the maximum duration T for the movement of complete opening/closing of the shutter 11 This value T is fixed (ie the same for the whole temperature range in which the valve is intended to operate), it is therefore independent of the gas temperature measured by the temperature sensor 23 and, suitably, it is supplied by the valve manufacturer. Conveniently, in this embodiment, the method according to the invention provides for monitoring the current absorption during the movement of complete opening/closing and, in particular, this is done by comparing the absorbed current value with at least two different parameters of control relating to the absorbed current. Conveniently, using at least two different control parameters relating to the absorbed current (preferably relative to the current absorbed over time) it is possible to monitor the variation over time of the current absorption profile, and this allows to identify/detect both the position and the condition of the valve. Preferably, in this embodiment, the control parameters relating to the absorbed current are correlated to a defined instant or time duration with respect to the beginning of the movement of the shutter 11.

Conveniently, in this embodiment, it is only the values of the control parameters relating to the absorbed current which are selected on the basis of the gas temperature which is measured by the temperature sensor 23 and/or on the basis of other operating conditions; in particular, for this purpose, in the control unit 21 the values of two or more control parameters relating to the current absorbed over time are associated with (and therefore depend on) different values of the gas temperature so as to select them on the basis of the gas temperature detected by the temperature sensor 23.

Conveniently, in this embodiment, if the time elapsed from the beginning of the movement of the shutter 11 is greater than T, then it means that the shutter 11 has encountered an obstacle during its movement stroke in opening or closing which prevented/blocked its complete opening or closing; if, on the other hand, the time elapsed from the beginning of the movement of the shutter 11 is less than T, then it is verified how the absorbed current profile has changed over time by comparing the absorbed current with two or more control parameters relating to the absorbed current over time, thus allowing to detect whether the movement of the shutter 11 has been slowed down in some way during the opening or closing movement.

Conveniently, the method according to the invention provides for using the time elapsed from the beginning of the movement of the shutter 11, preferably comparing it with control parameters defined by a series of increasing time durations, to determine the position in which the shutter 11 is located during its opening or closing movement stroke. In particular, the value of the time duration of each control parameter is associated/corresponds to a certain position of the shutter 11, and therefore to a certain percentage of opening/closing of the valve (for example opening at ¼, opening at ½, opening ¾, etc.).

Conveniently, the method according to the invention provides for detecting/verifying the condition and/or position of the shutter 11 without using and providing any position or displacement sensor connected to the valve, such as for example the LVDT transducer. Conveniently, the method according to the invention makes it possible to identify the position of the shutter without directly measuring its position, but obtaining/deducing it on the basis of the values of the current/electrical power absorbed by the electric actuator 17 and relative to the movement times of the shutter 11.

Conveniently, the control parameters relating to the electric current absorbed by the electric actuator 17 and/or relating to the movement times of the shutter 11 depend on a series of operating factors/conditions, such as in particular:
- the temperature of the gas flowing through valve 1 and meter 3,
- the pressure of the gas flowing through valve 1 and meter 3, and
- the power supply voltage/current supplied to the actuator 17 which causes movement of the shutter 11 of the valve 1, and
- the flow rate of the gas that passes through the valve 1 and the meter 3.

Advantageously, in the method according to the invention, each of said operating factors/conditions can assume a known and preset value or trend, or can be calculated or detected - preferably "real-time" and "on field"- by means of a corresponding sensor, for example by means of a gas pressure sensor and/or by means of a gas flow sensor and/or by means of a gas temperature sensor which are installed on the meter 1 and which are connected to the processing and control unit 21.

Furthermore, the control parameters relating to the electric current absorbed by the electric actuator 17 and/or relating to the movement duration of the shutter 11 also depend on the type of the valve and any obstacles that the shutter might encounter during its handling. In particular, all other factors/operating conditions being equal (ie gas pressure, gas flow rate, gas temperature and supply voltage), the trend of the current absorbed by the actuator 17 to move the shutter 11, and thus cause the opening/closing of valve 1 varies (in terms of amplitude and duration over time) during the subsequent phases of the opening/closing cycle of valve 1 depending on the force/thrust that is required/necessary to move the shutter 11 and which, in turn, depends on the mechanical conformation of the shutter (and therefore on the type of valve) and on the presence of any obstacles along the movement path of the shutter.

Advantageously, therefore, for each type of valve at least one control parameter is made available relating to the electric current absorbed by the electric actuator 17 and/or relating to the movement times of the shutter 11.

Preferably, the relative control parameters the electrical current absorbed by the electric actuator 17 and/or relative to the movement times of the shutter 11 are defined preliminarily and empirically by detecting the current absorbed - during an entire valve opening/closing cycle - by the movement actuator 17 of the shutter 11 of the corresponding valve in various operating conditions which are known and predefined, thus effectively defining its operational characterization. In particular, for this purpose, for each type of valve - preferably, depending on their size/shape, conformation and/or other mechanical characteristics of the shutter 11 and/or of the actuator 17, as well as on the basis of the manufacturer - detect the control parameters relating to the electrical current absorbed by the actuator 17 and/or relating to the movement times of the shutter 11 in at least two - preferably a plurality - of predefined operating conditions (in terms of values and/or ranges) gas temperature, gas pressure and/or gas flow rate and/or power supply voltage. Conveniently, said predefined conditions of gas temperature, gas flow rate, gas pressure and/or supply voltage - and in particular the corresponding values - remain substantially constant during the entire opening/closing phase of the valve.

More in detail, a series of experimental tests are carried out, in the absence of obstacles along the movement path of the shutter 11, as well as in known and predefined operating conditions of ambient temperature, gas temperature, gas pressure, gas flow rate and voltage supply, to thus detect corresponding reference/control trends of the current absorbed by the actuator 17 for moving the shutter 11 in order to cause the opening and/or closing of each valve; suitably, from the trends thus detected, the control parameters relating to the amplitude of the current absorbed by the actuator 17 and relating to the movement times of the shutter 11 are then defined/identified.

Preferably, among the various experimental tests carried out, the pressure of the gas and the supply voltage always remain the same, while the gas temperature varies.

Therefore, following the experimental tests carried out, each type of valve 1 is associated with a corresponding characterization C, which comprises at least two - preferably a plurality of - groups G of control parameter values relating to the electric current absorbed by the electric actuator 17 and/or relating to the movement times of the shutter 11, during an opening and/or closing cycle of the valve in the absence of obstacles that may block or hinder said movement, and detected in different operating conditions of gas temperature, gas flow rate, gas pressure and/or power supply voltage. Basically, the values of the control parameters of each group G of the characterization C of each valve 1 are associated with operating conditions of gas temperature, gas flow rate, gas pressure and/or supply voltage which are different from those of the other groups.

Preferably but not necessarily, the characterization C of each type of valve 1 comprises at least two - preferably three or more - groups G of values assumed by the control parameters and all obtained at the same predefined and constant gas pressure and supply voltage conditions, but in different gas temperature ranges. For example, considering that the meter 3 generally operates with an ambient temperature from about -25°C to about + 55°C, three different and separate gas temperature ranges are envisaged within this range - respectively RT₁, RT₂ and RT₃ and, for each of these three ranges, the values of the control parameters relating to the absorbed current or the duration of movement are identified. In other words, preferably, in the characterization C of the same type of valve, the groups G of the values of the control parameters are detected under the same gas pressure and supply voltage conditions, but at at least two - preferably three or more - different gas temperature conditions.

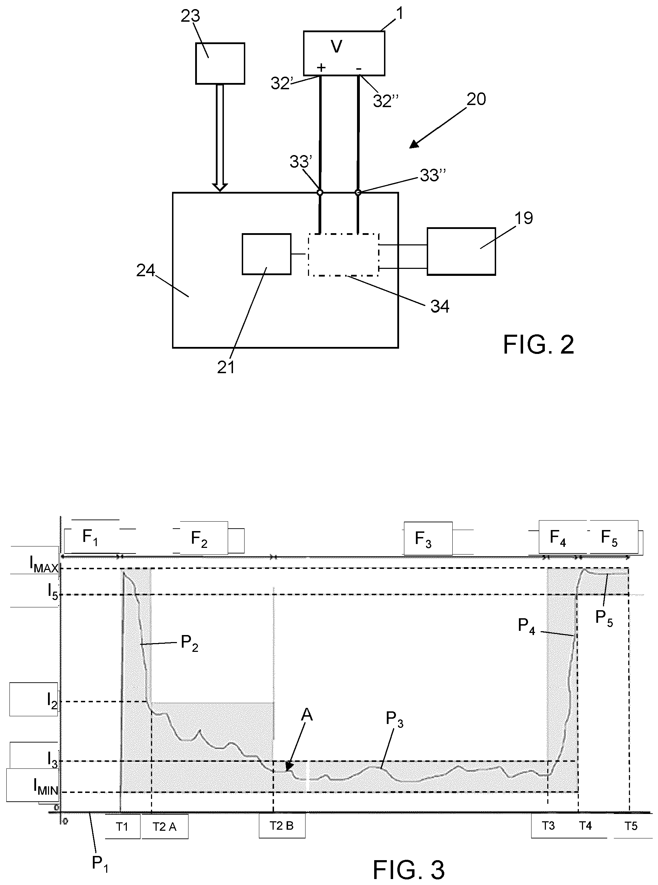

Advantageously, as shown in fig. 3, in the characterization C of each type of valve 1, to the sections P₁, P₂, P₃, P₄ and P₅ which - in sequence - define the trend A of the absorbed current, a corresponding phase F is associated/combined₁, F₂, F₃, F₄ and F₅ of the opening/closing cycle of the valve 1, and therefore a corresponding condition of the shutter 11.

In particular, the opening/closing cycle of the valve 1 is divided into a sequence of phases F₁, F₂, F₃, F₄ and F₅, each of which is associated with a different section P₁, P₂, P₃, P₄ and P₅ of the trend of the absorbed current. Conveniently, in each section P₁, P₂, P₃, P₄ and P₅, the amplitude of the absorbed current can have values different from those of the other sections and/or vary over time in a different way with respect to the other sections.

Conveniently, each phase F₁, F₂, F₃, F₄ and F₅ is characterized by:
- control parameters I₂, I₃, I_{MIN}, I_{MAX} relative to the current absorbed by the actuator 17 for moving the shutter 11,
- control parameters T_{2A}, T_{2B}, T₃, T₄ relating to the duration of the time intervals into which the movement of the shutter 11 can be divided.

In particular, suitably, during the characterization of each type of valve, starting from trend A that is detected, the values of the aforementioned control parameters are then identified/obtained.

Preferably, as shown in fig. 3, the valve opening/closing cycle can be divided into at least five phases F₁, F₂, F₃, F₄ and F₅, and in particular:
- a first phase F₁ corresponding to the receipt by the unit 21 of the command for moving the shutter 11 and to the activation of the circuits of the electronic apparatus 20 arranged for driving the actuator 17 for moving said shutter 11; in this phase, the absorbed current remains at zero and constant for a certain fixed and predefined time interval T₁,
- a second phase F₂ corresponding to the starting condition of the movement of the shutter; in particular, in this phase, the current rises rapidly reaching a peak and then decreases in a first time interval T_{2A} up to a current threshold value I₂ and then in a second time interval T_{2B} up to the current value I₃ (corresponding to the current absorption value during normal movement of the shutter 11),
- a third phase F₃, corresponding to the condition in which the shutter 11 continues to move; in particular, in this phase, the absorbed current is substantially between I₃ and I_{MIN} for a duration T₃,
- a fourth phase F₄, corresponding to the condition in which the shutter approaches the end of its movement and begins to mechanically force against its fixed housing which surrounds the passage section 12; in particular, in this phase, the current rapidly increases until it reaches the maximum value I_{MAX} within the time T₄,
- a fifth phase F₅, corresponding to the condition in which the shutter is seated against its fixed housing which surrounds the passage section 12 to thus maintain/guarantee the seal; in particular, in this phase, the absorbed current remains above a current value I₅, which is close to but lower than the maximum value I_{MAX}, for a fixed and predefined time T₅.

Advantageously, said cycle can comprise a sixth phase F₆ corresponding to the interruption of the command for moving the shutter 11 by the unit 21.

Conveniently, in a possible embodiment, said first phase F₁ may not be provided.

Conveniently, the values of the control parameters T_{2A}, I₂, T_{2B} of the second phase are defined/obtained during the tests aimed at defining the characterization C of a specific type of valve.

Conveniently, the values of the control parameters T₃, I₃, I_{MIN} of the third phase are defined/obtained during the tests aimed at defining the characterization C of a specific type of valve.

Conveniently, the values of the control parameters T₄, I_{MAX} of the fourth phase are defined/obtained during the tests aimed at defining the characterization C of a specific type of valve. Conveniently, the values of the control parameters I₂, I₃, I_{MIN}, I_{MAX}, I₅ (relative to the current absorbed by the actuator 17 for moving the shutter 11) and T_{2A}, T_{2B}, T₃, T₄ (relating to the duration of the time intervals into which the movement of the shutter 11 can be divided) are different between the opening cycle and the closing cycle and the respective values are defined/obtained during the tests aimed at defining the characterization C of a specific type of valve.

Conveniently, the values of the control parameters I₂, I₃, I_{MIN}, I_{MAX}, I₅ relating to the current absorbed by the actuator 17 for moving the shutter 11) and T_{2A}, T_{2B}, T₃, T₄(relating to the duration of the time intervals into which the movement of the shutter 11 can be divided) are associated with the different operating conditions of acquisition, and in particular with the gas temperature and/or the gas flow rate and/or the gas pressure and/or the power supply voltage.

Preferably, the values of the control parameters T₁ and T₅ are fixed, preset and are the same for the different acquisition operating conditions.

Advantageously, the values of the control parameters (of each group G and of each characterization C) relating to the current absorbed by the actuator 17 for moving the shutter 11 and relating to the movement times of the shutter 11 can be modified over time., preferably by means of a self-learning procedure, to adapt to the wear of the mechanical and electronic parts of valve 1.

Conveniently, the groups G of the values of the control parameters that define the characterization C of at least one type of valve 1 are stored and loaded to the internal of the processing and control unit 21. Therefore, the processing and control unit 21 has available a series of groups G of reference/control parameters acquired in, and therefore associated with, different and predefined/known operating conditions (e.g. gas temperature and/or gas flow rate and/or gas pressure and/or power supply voltage).

Advantageously, in a possible embodiment, the data relating to the characterization C of a single type of valve 1 can be stored and loaded inside the processing and control unit 21, a type that corresponds to the one mounted inside the meter 3. Conveniently, this data is stored and loaded during the production and/or assembly and/or test process of the meter 3.

Alternatively, in another possible embodiment, inside the processing and control unit 21 the characterization data C of at least two - preferably of a plurality of - valves 1 of different types are advantageously stored and loaded. Conveniently, therefore, in this case, valves 1 of various types can potentially be installed in the same meter 3 (at different times), then setting/selecting each time - manually or automatically - the data of the characterization C corresponding to the type valve installed. Preferably, in this case, the recognition of the type of valve 1 and therefore the choice of the characterization C relating to the type of valve that is actually mounted inside the meter 3 is carried out through configuration parameters set manually or automatically by means of a procedure of test carried out during the testing, assembly or customization phase of the meter 3.

Preferably, in a possible embodiment, the characterization data C of the relative control parameters are advantageously stored and loaded inside the processing and control unit 21 to the current absorption of at least two - preferably of a plurality of - valves 1 of different types alone. Conveniently, therefore, in this case, valves 1 of various types can potentially be installed in the same meter 3 (at different times), then setting/selecting each time - manually or automatically - the data of the characterization C corresponding to the type valve installed.

Inside the processing and control unit 21 there is also loaded and executed software - preferably at the firmware level - which is programmed so as to implement a method as described above.

Conveniently, the electronic apparatus 20 is configured so that the processing and control unit 21 detects and/or calculates the current absorbed by the actuator 17 for moving the shutter 11. Preferably, the measurement of the current absorbed by the actuator 17 movement of the shutter 11 is obtained (by means of Ohm's law) by the processing and control unit 21 by measuring the voltage in correspondence with a current diverter (in particular a resistor of the "shunt" type) which is connected in series to the power supply unit 19. Preferably, the current diverter is mounted on the electronic circuit 24 of the electronic apparatus 20 (in particular in series with the positive/negative pole of the valve). Preferably, the shunt resistor has an electrical resistance between 1 ohm and 10 ohm and this is particularly advantageous as it allows a high discrimination of the measured current values and a low noise in the measurement, without however limiting too much the current value which otherwise could prevent the correct operation of the actuator 17 of the valve itself.

Conveniently, the software of the control and processing unit 21 is configured to acquire/calculate the value of the current I_{ACTUAL} absorbed by the actuator 17 for moving the shutter 11. Preferably, the value of the current I_{ACTUAL} corresponds to the instantaneous value or to the average of a series of instantaneous values, acquired/sampled in sequence, of the current absorbed by the actuator 17 for moving the shutter 11. Conveniently, the sampling/acquisition frequency can be about 10ms and 100ms, preferably for example 50 ms.

Preferably, the software of the processing and control unit 21 is programmed so as to:
- acquire/calculate the value of the current I_{ACTUAL} absorbed by the actuator 17 for moving the shutter 11,
- compare the value of the current I_{ACTUAL} with the control parameters relating to the absorbed current,
- on the basis of the comparison thus made, it identifies the position and/or condition in which the shutter 11 is found, and therefore in which phase of the opening/closing cycle the corresponding valve is located.

Advantageously, said control and processing unit 21 can comprise and/or be connected to a counter (timer) for measuring time intervals starting from a start signal; preferably, said counter measures time intervals by basing/counting the system clock pulses.

Conveniently, the software of the control and processing unit 21 is configured to acquire/calculate, by means of the counter (timer), the time elapsed with respect to the start of the movement of the shutter 11, to thus provide a time value T_{ACTUAL}. Advantageously, the software of the control and processing unit 21 can be configured to also acquire/calculate, by means of the counter (timer), the time elapsed with respect to the reception of the shutter movement command, to thus also detect the time elapsed between the receipt of the command to move the shutter 11 and the start of the movement of the latter
Preferably, the software of the processing and control unit 21 is programmed so as to:
- acquire/calculate the value T_{ACTUAL} of the time elapsed with respect to the start of the shutter 11 movement,
- compare the calculated value T_{ACTUAL} with the control parameters relating to the duration of the time intervals into which the movement of the shutter 11 can be divided,
- on the basis of the comparison thus made, it identifies the condition and/or position in which the shutter 11 is located, and therefore in which phase of the opening/closing cycle the corresponding valve is located.

Preferably, the software of the processing and control unit 21 is programmed so as to:
- acquire/calculate the value of the current I_{ACTUAL} absorbed by the actuator 17 for moving the shutter 11 and the value T_{ACTUAL} of the time elapsed with respect to the start of the movement of the shutter 11,
- comparing the calculated values I_{ACTUAL} and T_{ACTUAL} with the control parameters relating respectively to the current absorbed by the actuator 17 for moving the shutter 11 and the duration of the time intervals into which the movement of the shutter 11 can be divided; preferably, the control parameters are the parameters I₂, I₃, I_{MIN}, I_{MAX}, I₅ and T_{2A}, T_{2B}, T₃, T₄ as described above,
- on the basis of the comparison thus made, it identifies the condition and/or position in which the shutter 11 is located, and therefore in which phase of the opening/closing cycle the corresponding valve is located.

Advantageously, the control parameters used for the comparison are part of the characterization C of that specific type of valve which has been loaded and stored in the processing and control unit 21.

Advantageously, moreover, among the various groups G of control parameters belonging to characterization C of that type of valve 1, the processing and control unit 21 selects and uses for the aforementioned comparison a specific group G of control parameters which - within the characterization C stored in the unit 21 - is associated with gas temperature and/or gas flow and/or gas pressure and/or supply voltage conditions that correspond to those detected by at least one corresponding sensor, configured to detect the gas temperature and/or gas flow rate and/or o gas pressure and/or gas flow, and/or correspond to the detected/calculated supply voltage.

Advantageously, in a possible embodiment, among the various groups G of control parameters relating only to the current absorption and belonging to the characterization C of that type of valve 1, the processing and control unit 21 selects and uses for the aforementioned comparison of a specific group G of control parameters relating only to current absorption which - within the characterization C stored in unit 21 - is associated with conditions of gas temperature and/or gas flow rate and/or gas pressure and/or power supply voltage that correspond to those detected by at least one corresponding sensor, configured to detect the gas temperature and/or gas flow and/or gas pressure and/or gas flow, and/or correspond to the voltage power detected/calculated. Conveniently, in this embodiment, a single control parameter can be provided relating to the maximum time duration of movement of the shutter in opening and closing and this parameter remains fixed and is independent of the gas and/or operating temperature of the valve 1.

Conveniently, the control parameters used for the comparison can include one or more of the following parameters:
- T_{MIN} which corresponds to the minimum duration of the time interval in which the shutter 11 is moved to make it pass from a position of complete opening of the passage section to the position of complete closure of the passage section, or vice versa,
- I_{MAX} which corresponds to the value of the current absorbed by the actuator 17 when the shutter 11 has reached its limit switch in opening or closing and, therefore, mechanically pushes on its fixed housing that surrounds the passage section 12, that is - in other words - is in a position of complete opening of the passage section or in a position of complete closure of the passage section.

Preferably, T_{MIN} can correspond to T₂ (ie T_{2A} + T_{2B}) + T₃ + T₄.

Conveniently, the I_{MAX} is calculated on the basis of the absorbed current actually measured. In particular, the I_{MAX} (also called I_{INSTALLATION}) is defined as a percentage with respect to the value that the valve manufacturer provides as handling current (I_{RUN}), and preferably corresponds to the average measurement current measured a few seconds after the start of the handling.

Conveniently, the software of the processing and control unit 21 is programmed so that - if the acquired/calculated current I_{ACTUAL} is greater than or equal to the value of the parameter of I_{MAX} and if the time interval T_{ACTUAL} (ie the elapsed with respect to the start of the shutter movement) is greater than T_{MIN} - identifies a condition in which the shutter 11 has correctly reached its limit switch, i.e. it is correctly in a position of complete opening of the passage section or in a position of complete closure of the passage section.

Conveniently, the software of the processing and control unit 21 is programmed so that - if the acquired/calculated current I_{ACTUAL} is greater than or equal to the value of the parameter of I_{MAX} and if the time interval T_{ACTUAL} (ie the elapsed with respect to the start of the shutter movement) is lower than T_{MIN} - identifies a condition in which the shutter 11 has encountered an obstacle during its stroke and, therefore, has not reached its limit switch correctly, i.e. it is in an intermediate position between the fully open and fully closed positions of the passage section.

Advantageously, before starting a cycle of actual movement of the shutter 11 (ie before activating the circuit used to drive the actuator 17), the software of the processing and control unit 21 checks, preferably by means of a preliminary voltage sampling on the resistive shunt, if there is a circulation of current possibly absorbed by the actuator 17 or by the driving circuit, which indicates a possible fault.

Advantageously, then, when the shutter 11 movement cycle is actually started, the software of the processing and control unit 21 checks whether the current absorbed by the actuator 17 is lower than the value of the parameter of I_{MAX}, but higher than a predetermined minimum threshold value, to thus detect whether the shutter 11 is in a position of complete opening of the passage section or in a position of complete closure of the passage section. Basically, before starting the automatism for moving the shutter 11 of the valve 1, an initial measurement of the current value is carried out, in order to evaluate any anomalous states and, appropriately, to ensure that the movement of the shutter 11 always starts from its extreme positions (ie of complete opening or closing).

Advantageously, the control parameters, pre-stored in the processing and control unit 21 and used for the aforementioned comparison aimed at identifying the condition of the valve, can also include one or more of the aforementioned parameters I₂, I₃, I_{MIN}, I_{MAX}, I₅ and T₁, T_{2A}, T_{2B}, T₃, T₄, T₅.

Advantageously, the control parameters, pre-stored in the processing and control unit 21 and used for the aforementioned comparison aimed at identify the condition of the valve, they may include one of the following parameters:
- T_{MAX} corresponding to the maximum duration of the opening/closing cycle to move the shutter 11 from a position of complete opening of the passage section to the position of complete closing of the passage section, or vice versa;
- T₁ corresponding to the waiting time before starting the movement of the shutter 11,
- I₅ corresponding to the minimum threshold of current absorbed by the actuator 17 when the shutter 11 is in a position of complete opening of the passage section or in a position of complete closure of the passage section,
- T₅ corresponding to the time in which the absorbed current is between I₅ and I_{MAX}.

Preferably, the software of the processing and control unit 21 is programmed so that
- if the acquired/calculated current I_{ACTUAL} is between I_{MIN} and I₃- the shutter 11 is in movement.

Preferably, the software of the processing and control unit 21 is programmed so that
- if the acquired/calculated current I_{ACTUAL} is between I_{MAX} and I₅ - the actuator 17 is pushing the shutter against its housing to ensure maintaining the fully open/closed position.

Advantageously, each current and/or time parameter serves to identify a movement phase of the shutter 11 of the valve or of its position, in order to understand if it is in a legal or illegal position. Basically, these controls allow to obtain, in space and time, the condition of the valve. Preferably, each control (ie verification of a parameter) can identify the passage to a next/previous state of measurement, control and action, or it identifies an error state in case of anomalies.

Conveniently, moreover, the electronic apparatus 20 for controlling the valve 1 is configured at the hardware and/or software level so as to ensure that, during the movement of the shutter 11 and the detection of the absorbed current, the supply voltage of the actuator 17 of the valve 1 is substantially constant, and that in particular it remains in an interval between 2.7V and 3.6V around the nominal operating value of the valve itself. Preferably, for this purpose, the electronic circuit 24 can be configured to maintain substantially constant, or at most variable by ± 0.3V, the supply voltage, which is supplied by the supply unit 19. Preferably, in another possible form of realization, the actuator 17 of the valve 1 can be configured to work in the whole range of the supply voltage and this is advantageous since it avoids the use of the voltage regulator, thus piloting the valve directly with the supply voltage which is supplied by the power supply unit 19.

Conveniently, the software of the processing and control unit 21 is configured so that the value of the power supply voltage is preset from the outside and, preferably, can be configured during the characterization phase for each different model of electronic apparatus 20, or it can be set on the basis of a corresponding measurement received from the processing and control unit 21. O suitably, the value of the supply voltage can be used to select a specific group G of control parameter values among the values of the various pre-stored groups G belonging to the characterization C of that specific type of valve.

Conveniently, the software is configured in such a way as to always consider the same pressure of the gas flowing through valve 1 and/or meter 3. In particular, this setting derives from the fact that the gas distribution network, which is connected to the meter 3 in which valve 1 is installed, is configured to guarantee a gas supply always at the same pressure. Conveniently, this gas pressure value is therefore preset or can be set, case by case, on the basis of the data detected by at least one pressure sensor mounted in the meter 3, preferably positioned upstream and/or downstream of said valve 1. Conveniently, the gas pressure value can be used to select a specific group G of control parameter values among the values of the various pre-stored groups G belonging to the characterization C of that specific type of valve.

Conveniently, the software loaded and executed in the electronic processing and control unit 21 is configured so as to select - on the basis of the signal that said unit 21 receives from the temperature sensor 23 and which is representative of the temperature of the gas passing through the valve 1 and/or meter 3 - a specific group G of control parameter values among the various/multiple values of the various groups G, all belonging to the same characterization C which is associated with that specific type of valve 1. Conveniently, the values of the group G, thus selected, are then used for the comparison with the acquired/calculated values of the current I_{ACTUAL} absorbed by the actuator 17 for moving the shutter 11 and the time T_{ACTUAL} elapsed with respect to the start of the movement of the shutter 11.

In particular, therefore, the software is configured to select, on the basis of the gas temperature detected by the temperature sensor, i values of the control parameters, among those pre-stored and relating to the characterization C of that type of valve, which are correlated with the gas temperature corresponding to or in any case close to that actually detected by the temperature sensor 23.

The software is appropriately configured to make this selection of the control parameter values, once it has received the valve opening/closing command, but before starting the valve 1 opening/closing cycle, or in any case before starting the shutter 11 movement phase.

Advantageously, as said, the software loaded and executed in the electronic processing and control unit 21 can be configured so as to select - on the basis of the signal that said unit 21 receives from a gas pressure sensor and/or on the base of the detected supply voltage - the values of the control parameters, among those pre-memorized and related to the characterization and C of that type of valve, which are correlated with the gas pressure corresponding or in any case close to that actually detected by the corresponding pressure sensor or with the power supply voltage actually detected. Conveniently, the values of the control parameters thus selected are then used for comparison with the acquired/calculated values of the current I_{ACTUAL} absorbed by the actuator 17 for moving the shutter 11 and the time T_{ACTUAL} elapsed with respect to the start of the movement of the shutter 11.

Conveniently, the software loaded and executed in the electronic processing and control unit 21 is also configured so that, if and when - in the light of the comparison of the acquired/calculated values of the current I_{ACTUAL} and of the time T_{ACTUAL} with the values of the control parameters - detects identifies an anomalous condition (for example identified by a misalignment/mismatch between the acquired/calculated values and those of the control parameters), then it can command the stop of the movement of the shutter 11 by interrupting the power supply of the actuator 17 or it can command the inversion of the movement direction of the actuator 17 (in part connect by inverting the polarity at the two contacts 33' and 33" connected to the power supply unit 19), and then the shutter 11 returns to the initial position.

Conveniently, the electronic processing and control unit 21 is also configured to receive a signal representative of the gas flow rate through the valve 1, and/or upstream/downstream thereof, and detected by means of a flow sensor (flow meter). Advantageously, the software loaded and executed in said unit 21 is configured so as to use said gas flow signal as a feedback signal to correct and/or confirm the condition/position of the shutter 11, and therefore of the valve 1, which is identified on the basis of the current absorbed by the actuator 17 for moving the shutter 11 and/or the movement times of the shutter 11.

Conveniently, the electronic processing and control unit 21 is also configured to receive a signal representative of the difference in gas pressure upstream and downstream of valve 1, detected by means of corresponding pressure sensors. Advantageously, the software loaded and executed in said unit 21 is configured in such a way as to use said signal relating to the difference in gas pressure upstream and downstream of the valve 1 as a feedback signal to correct and/or confirm the condition/position of the shutter 11, and therefore of the valve 1, which is identified on the basis of the current absorbed by the actuator 17 for moving the shutter 11 and/or the movement times of the shutter 11.

Conveniently, the method according to the invention can be used regardless of the type of meter, and the type of gas measurement used by the latter, as it is necessary and sufficient that there be an electronic control and processing unit 21 which is connected to at least one valve 1 housed, at least partly, in a counter.

The present invention also relates to a valve 1 which is provided and/or associated with an electronic control and processing unit 21, which is programmed to implement the method described above and/or in which a software as above is loaded and executed. described.

The present invention also relates to a gas meter 3 which comprises - inside its casing 2 - at least one valve 1 which is provided with and/or is associated with an electronic control and processing unit 21 which is programmed to implement the method described above and/or where software as described above is loaded and executed.

The present invention also relates to a gas meter 3 which comprises - inside its casing 2 - at least one valve 1, as described above, and which also comprises an electronic control and processing unit 21 which is programmed to implement the method described above and/or where software as described above is loaded and executed. Suitably, in such a case, the electronic control and processing unit 21 of the valve 1 can be integrated and/or connected to the electronic board of the measuring module and/or communication which is fitted to the meter 3.

From the aforegoing it clearly that the method according to the invention is quite advantageous given that:
- starting from a known position, it allows to identify - based on the measurements of the movement time and/or the absorbed current - the position of the valve plug,
- it allows to detect the condition and position of the shutter during movement without the need to use and install additional hardware components, such as encoders or limit switches,
- it allows to reduce the wiring and the overall dimensions of the valve unit,
- the valve assembly is constructively simpler, thus allowing greater resilience over time,
- it can be implemented in a simple and inexpensive way; in particular, in fact, the measurement of the absorbed current can be carried out on a current diverter (in particular a resistive shunt) in series with the actuator of the valve itself,
- the accuracy of the valve plug condition/position recognition can be improved simply by increasing the sampling rate (e.g. using a more accurate analog-to-digital converter), without requiring any software changes,
- the characterization of the valve behavior, carried out previously in the laboratory, allows to adapt and optimally manage the various operating situations in which the valve itself may find itself, once - in use - it has been inserted into a gas meter,
- it allows to readily detect the presence of an obstacle in the movement stroke of the shutter, in order to be able to carry out an appropriate feedback action (such as, for example, stopping the movement, reversing the movement to return to the initial position, etc.)
- it can adapt to multiple valve models simply by recognizing the valve itself through a hardware configuration or by self-recognition with a pattern of test movements,
- it can be remotely updated like any firmware/software of a gas meter/meter.

Conveniently, unlike WO2020/026188 and US2020/0072892 which are configured to identify only a fault condition or at most the reaching of the limit switch position in opening or closing, the solution according to the invention also allows to identify the positions/intermediate conditions of the shutter during the entire opening or closing movement cycle, thus allowing to identify in which phase of the opening/closing cycle the corresponding valve is located.

Conveniently, unlike US2015/0107675 which requires the use of a position sensor defined by an inductive displacement transducer (also called "LVDT"), the solution according to the invention allows to detect/verify the condition and/or position shutter without using and providing any position or displacement sensor connected to the valve. This is particularly advantageous as it avoids the use of additional or dedicated sensors, such as LVDT transducers, which are particularly expensive and can be damaged over time.

The present invention has been illustrated and described in some of its preferred embodiments, but it is understood that executive variations may apply thereto in practice, without however departing from the scope of protection of the present patent for industrial invention.

## Claims

1. Method for controlling a valve (1) which is of the type in which the movement of its shutter (11) is controlled by an electric or electromechanical actuator (17), said valve (1) being intended to be used and housed, entirely or at least in part, inside the casing (2) of a gas meter (3) to intercept, at least in part, the gas flow at the gas inlet and/or outlet in/by said meter, wherein in said method:
- the condition and/or position of said shutter (11) is detected/verified on the basis of the electric current absorbed by said actuator (17) which causes the movement of said shutter (11gv) of the valve,
- the condition and/or position of the shutter (11) of said valve (1) is detected/verified on the basis also of the time elapsed from the start of the movement of the shutter (11), preferably comparing it with the predefined value of a control parameter (T) relating to the maximum duration for the complete opening/closing movement of the shutter (11),
said method is **characterized in that**, at the start of the movement cycle of the shutter (11), it is checked whether the electric current absorbed by the actuator (17) is lower than a maximum value I_{MAX}, but higher than a predetermined minimum threshold value, to thus detect whether the shutter is in a position of complete opening or closing of the passage section.

2. Method according to claim 1, **characterized in that**:
- the current I absorbed by the actuator (17) during the movement of the shutter (11) in an opening/closing cycle of the valve (1) is measured and quantified,
- the current value thus quantified and measured is correlated with the condition and/or position of the shutter (11) of the valve (1),
and also **characterized by** the fact that said correlation between the current absorbed by the actuator (17) and the condition and/or position of the shutter (11) of the valve (1) is carried out by comparing the measured and/or calculated values of the absorbed current with the predefined value of at least one control parameter relating to the absorbed current, preferably with the predefined values of two or more control parameters relating to the current absorbed over time by the actuator (17), obtained during/by means of at least one control/test opening/closing cycle which is carried out under known and predefined conditions on a valve of the same type which is used as a reference.

3. Method according to one or more of the preceding claims, **characterized in that**:
- during an opening/closing cycle of the valve (1), the time interval elapsed from the beginning of the movement of the shutter (11) of the valve (1) is measured and quantified,
- the time thus measured and quantified is correlated with the condition and/or position of the shutter (11) of the valve (1),
and also **characterized by** the fact that said correlation between the movement times of the shutter (11) and the condition and/or position of the shutter (11) of the valve (1) is carried out by comparing the measured and/or calculated values of the time elapsed from the beginning of the movement of the shutter (11) with the default value of at least one control parameter relating to the movement time of the shutter (11) obtained during/through at least one control/test opening/closing cycle which is carried out under known and predefined conditions on a valve of the same type which is used as a reference.

4. Method according to one or more of the preceding claims, **characterized in that**:
- during an opening/closing cycle of the valve (1), the time interval elapsed from the beginning of the movement of the shutter (11) of the valve (1) is measured and quantified,
- the current I absorbed by the actuator (17) during the movement of the shutter (11) in an opening/closing cycle of the valve (1) is measured and quantified,
- the current value thus quantified and measured is combined with the time interval thus measured and quantified to determine the position in which the shutter (11) is located during said opening/closing cycle of the valve itself.

5. Method according to one or more of the preceding claims, **characterized in that** the movement times of the shutter (11) are used, in combination with the electric current absorbed by the actuator (17), to determine whether:
- said shutter (11) has reached a limit switch position in opening or closing, and
- the shutter (11) of the valve (1) has encountered an obstacle during its movement stroke in opening or closing, and/or if this movement is in some way slowed down.

6. Method according to one or more of the preceding claims, **characterized in that** it detects/checks the condition and/or position of the shutter (11) of said valve (1):
- comparing the measured and/or calculated values of the absorbed current with the default values of at least two control parameters relating to the current absorbed over time by the actuator (17), said default values of at least two control parameters relating to the current absorbed over time by the actuator (17) being selected according to the gas temperature and/or the valve (11) detected during the operational functioning of the valve itself, and
- comparing the time elapsed from the beginning of the movement of the shutter (11) with the default value of a single control parameter corresponding to the maximum duration (T) for the movement of complete opening/closing of the shutter (11), called default value relative to the maximum duration (T) for the complete opening/closing movement of the shutter (11) being unique and independent of the temperature of the gas and/or of the valve (11) detected during the operational operation of the valve itself.

7. Electronic apparatus (20) for controlling the opening/closing of a valve (1) which is of the type in which the movement of its shutter (11) is controlled by an electric or electromechanical actuator (17) connected to said apparatus ( 20), said valve (1) being intended to be used and housed, entirely or at least in part, inside the casing (2) of a gas meter (3) in order to intercept, at least in part, the flow of gas at the gas inlet and/or outlet in said meter, said electronic apparatus (20) comprising a processing and control unit (21) which is programmed to implement a method according to one or more of the preceding claims and **characterized in that** in the processing and control unit (21) a software is installed and executed which is programmed so as to:
- acquire/calculate the value of the current I_{ACTUAL} absorbed by the shutter (11) movement actuator (17) and the value T_{ACTUAL} of the time elapsed with respect to the start of the shutter movement (11),
- compare the acquired/calculated values I_{ACTUAL} and T_{ACTUAL} with control parameters relating respectively to the current absorbed by the actuator (17) for moving the shutter (11) and to the maximum duration (T) for the movement of complete opening/closure of the shutter (11) and/or the duration of the time intervals into which the movement of the shutter (11) is divided,
- on the basis of the comparison thus made, identify the position and/or condition in which the shutter (11) is located, and therefore in which phase of the opening/closing cycle the corresponding valve is located.

8. Electronic apparatus according to the preceding claim, **characterized in that** it comprises a current diverter, preferably a resistor of the shunt type, which is connected in series to a power supply unit (19) for said actuator (17) and **in that** said processing and control unit (21) is configured to acquire the current absorbed by the actuator (17) for moving the shutter (11) by measuring the voltage at said current diverter.

9. Electronic apparatus according to one or more of the preceding claims, **characterized in that** said control parameters are selected to divide the valve opening/closing cycle so as to include at least the following phases:
- a second phase F₂ corresponding to the starting condition of the movement of the shutter; in said second phase F₂, the current rises rapidly reaching a peak and then decreases in a first time interval T_{2A} up to a current threshold value I₂ and then in a second time interval T_{2B} up to the current value I₃ corresponding to the current absorption value during normal movement of the shutter (11),
- a third phase F₃, corresponding to the condition in which the shutter (11) continues to move; during said third phase F₃, the absorbed current is substantially comprised between I₃ and I_{MIN} for a duration T₃,
- a fourth phase F₄, corresponding to the condition in which the shutter approaches the end of its movement and begins to mechanically force against its fixed housing which surrounds the passage section (12) of the valve; during said fourth phase F₄, the current rapidly increases until it reaches the maximum value I_{MAX} within the time T₄,
- a fifth phase F₅, corresponding to the condition in which the shutter is seated against its fixed housing which surrounds the passage section (12) to thus maintain/guarantee the seal; during said fifth phase F₅, the absorbed current remains above a current value I₅, which is close to but lower than the maximum value I_{MAX}, for a fixed and predefined time T₅.

10. Electronic apparatus according to one or more than the previous claims, **characterized by** the fact that:
- in said processing and control unit (21) the characterization (C) of at least one type of valve (1) is loaded, said characterization (C) comprising at least two groups (G) of control parameter values to be used for said comparison,
- said at least two groups (G) comprise values of the control parameters, preferably relative to the electric current absorbed by the actuator (17) and/or relative to the movement times of the shutter (11), which have been acquired during a cycle opening and/or closing of the valve in the absence of obstacles which may block or hinder said movement, and which have been acquired in gas temperature operating conditions which are different between said at least two groups (G).

11. Electronic apparatus one or more of the preceding claims, **characterized in that**:
- in said processing and control unit (21) the characterization (C) of at least one type of valve (1) is loaded, said characterization (C) comprising at least two groups (G) of control parameter values to be used for said comparison,
- said at least two groups (G) comprise values of the control parameters, preferably relative to the electric current absorbed by the actuator (17) and/or relative to the movement times of the shutter (11), which have been acquired during a cycle opening and/or closing of the valve in the absence of obstacles that may block or hinder said movement, and which have been acquired in operating conditions of gas flow rate and/or gas pressure and/or power supply voltage which are different from each other at least two groups (G).

12. Electronic apparatus one or more of the preceding claims, **characterized in that** said processing and control unit (21) is configured to use the data coming from a sensor which detects the gas temperature and/or the gas pressure and/or the flow rate of the gas that passes through the valve (1) and/or that passes through the meter (3) in which said valve is intended to be installed, and thus selects, on the basis of said data, among the various groups (G) stored and belonging to the characterization (C) of the specific type of valve intended to be controlled by said apparatus (20), a specific group (G) of control parameter values to be used for said comparison.

13. Electronic apparatus according to the preceding claim, **characterized in that** the software loaded and executed in said unit (21) is configured in such a way as to use a gas flow signal and/or a signal representative of the pressure difference of the upstream gas and downstream of the valve (1) as a feedback signal to correct and/or confirm the condition/position of the shutter (11), and therefore of the valve (1), which is identified on the basis of the current absorbed by the actuator (17) of shutter (11) movement and/or of the shutter (11) movement time(s).

## Patentansprüche

1. Verfahren zur Steuerung eines Ventils (1), das vom Typ ist, bei dem die Bewegung seines Verschlusses (11) durch einen elektrischen oder elektromechanischen Aktuator (17) gesteuert wird, wobei das Ventil (1) dazu bestimmt ist, ganz oder zumindest teilweise innerhalb des Gehäuses (2) eines Gaszählers (3) verwendet und untergebracht zu werden, um die Gasströmung am Gaseinlass und/oder -auslass in/durch den Zähler zumindest teilweise abzufangen, wobei in dem Verfahren:
- der Zustand und/oder die Position des Verschlusses (11) auf der Grundlage des vom Aktuator (17) absorbierten elektrischen Stroms, der die Bewegung des Verschlusses (11gv) des Ventils verursacht, detektiert/überprüft wird,
- der Zustand und/oder die Position des Verschlusses (11) des Ventils (1) auch auf der Grundlage der Zeit, die seit dem Beginn der Bewegung des Verschlusses (11) verstrichen ist, detektiert/überprüft wird, indem sie vorzugsweise mit dem vordefinierten Wert eines Steuerparameters (T) verglichen wird, der die maximale Dauer für die vollständige Öffnungs- /Schließbewegung des Verschlusses (11) betrifft,
wobei das Verfahren **dadurch gekennzeichnet ist, dass** zu Beginn des Bewegungszyklus des Verschlusses (11) überprüft wird, ob der vom Aktuator (17) absorbierte elektrische Strom kleiner als ein Maximalwert I_{MAX}, jedoch größer als ein vorbestimmter Mindestschwellwert ist, um so zu detektieren, ob sich der Verschluss in einer Position der vollständigen Öffnung oder Schließung des Durchgangsabschnitts befindet.

2. Verfahren nach Anspruch 1, **dadurch gekennzeichnet, dass**:
- der vom Aktuator (17) während der Bewegung des Verschlusses (11) in einem Öffnungs-/Schließzyklus des Ventils (1) absorbierte Strom I gemessen und quantifiziert wird,
- der so quantifizierte und gemessene Stromwert mit dem Zustand und/oder der Position des Verschlusses (11) des Ventils (1) korreliert wird,
und auch **dadurch gekennzeichnet, dass** die Korrelation zwischen dem vom Aktuator (17) absorbierten Strom und dem Zustand und/oder der Position des Verschlusses (11) des Ventils (1) durch Vergleichen der gemessenen und/oder berechneten Werte des absorbierten Stroms mit dem vordefinierten Wert mindestens eines Steuerparameters betreffend den absorbierten Strom durchgeführt wird, vorzugsweise mit den vordefinierten Werten von zwei oder mehr Steuerparametern betreffend den vom Aktuator (17) über die Zeit absorbierten Strom, die während/mittels mindestens eines Steuer-/Prüföffnungs- /Schlieβzyklus erhalten werden, der unter bekannten und vordefinierten Zuständen an einem Ventil des gleichen Typs durchgeführt wird, das als Referenz verwendet wird.

3. Verfahren nach einem oder mehreren der vorhergehenden Ansprüche, **dadurch gekennzeichnet, dass**:
- während eines Öffnungs-/Schlieβzyklus des Ventils (1) das Zeitintervall, das seit dem Beginn der Bewegung des Verschlusses (11) des Ventils (1) verstrichen ist, gemessen und quantifiziert wird.
- die so gemessene und quantifizierte Zeit mit dem Zustand und/oder der Position des Verschlusses (11) des Ventils (1) korreliert wird,
und auch **dadurch gekennzeichnet, dass** die Korrelation zwischen den Bewegungszeiten des Verschlusses (11) und dem Zustand und/oder der Position des Verschlusses (11) des Ventils (1) durch Vergleichen der gemessenen und/oder berechneten Werte der Zeit, die seit dem Beginn der Bewegung des Verschlusses (11) verstrichen ist, mit dem Vorgabewert mindestens eines Steuerparameters betreffend die Bewegungszeit des Verschlusses (11) durchgeführt wird, der während/durch mindestens einen Steuer-/Prüföffnungs-/Schlieβzyklus erhalten wird, der unter bekannten und vordefinierten Zuständen an einem Ventil des gleichen Typs durchgeführt wird, das als Referenz verwendet wird.

4. Verfahren nach einem oder mehreren der vorhergehenden Ansprüche, **dadurch gekennzeichnet, dass**:
- während eines Öffnungs-/Schlieβzyklus des Ventils (1) das Zeitintervall, das seit dem Beginn der Bewegung des Verschlusses (11) des Ventils (1) verstrichen ist, gemessen und quantifiziert wird.
- der vom Aktuator (17) während der Bewegung des Verschlusses (11) in einem Öffnungs-/Schließzyklus des Ventils (1) absorbierte Strom I gemessen und quantifiziert wird,
- der so quantifizierte und gemessene Stromwert mit dem so gemessenen Zeitintervall kombiniert und quantifiziert wird, um die Position zu bestimmen, in der sich der Verschluss (11) während des Öffnungs-/Schlieβzyklus des Ventils selbst befindet.

5. Verfahren nach einem oder mehreren der vorhergehenden Ansprüche, **dadurch gekennzeichnet, dass** die Bewegungszeiten des Verschlusses (11) in Kombination mit dem vom Aktuator (17) absorbierten elektrischen Strom verwendet werden, um zu bestimmen, ob:
- der Verschluss (11) beim Öffnen oder Schließen eine Endschalterposition erreicht hat, und
- der Verschluss (11) des Ventils (1) während seines Bewegungshubs beim Öffnen oder Schließen auf ein Hindernis gestoßen ist und/oder wenn diese Bewegung in irgendeiner Weise verlangsamt wurde.

6. Verfahren nach einem oder mehreren der vorhergehenden Ansprüche, **dadurch gekennzeichnet, dass** es den Zustand und/oder die Position des Verschlusses (11) des Ventils (1) detektiert/überprüft:
- Vergleichen der gemessenen und/oder berechneten Werte des absorbierten Stroms mit den Vorgabewerten von mindestens zwei Steuerparametern betreffend den vom Aktuator (17) über die Zeit absorbierten Stroms, wobei die Vorgabewerte von mindestens zwei Steuerparametern betreffend den vom Aktuator (17) über die Zeit absorbierten Strom entsprechend der während der Betriebsfunktion des Ventils selbst detektierten Gastemperatur und/oder des Ventils (11) ausgewählt werden, und
- Vergleichen der Zeit, die seit dem Beginn der Bewegung des Verschlusses (11) verstrichen ist, mit dem Vorgabewert eines einzelnen Steuerparameters, der der maximalen Dauer (T) für die Bewegung des vollständigen Öffnens/Schließens des Verschlusses (11) entspricht, wobei der besagte Vorgabewert relativ zu der maximalen Dauer (T) für die vollständige Öffnungs- /Schließbewegung des Verschlusses (11) eindeutig und unabhängig von der Temperatur des Gases und/oder des Ventils (11) ist, die während des Betriebs des Ventils selbst detektiert wird.

7. Elektronisches Gerät (20) zur Steuerung des Öffnens/Schließens eines Ventils (1), das vom Typ ist, bei dem die Bewegung seines Verschlusses (11) durch einen elektrischen oder elektromechanischen Aktuator (17) gesteuert wird, der mit dem Gerät (20) verbunden ist, wobei das Ventil (1) dazu bestimmt ist, ganz oder teilweise innerhalb des Gehäuses (2) eines Gaszählers (3) verwendet und untergebracht zu werden, um die Gasströmung am Gaseinlass und/oder -auslass in dem Zähler zumindest teilweise abzufangen, wobei das elektronische Gerät (20) eine Verarbeitungs- und Steuereinheit (21) umfasst, die programmiert ist, um ein Verfahren nach einem oder mehreren der vorhergehenden Ansprüche durchzuführen, und **dadurch gekennzeichnet ist, dass** in der Verarbeitungs- und Steuereinheit (21) eine Software installiert und ausgeführt wird, die zu Folgendem programmiert ist:
- Erfassen/Berechnen des Werts des Stroms I_{IST}, der vom Bewegungsaktuator (17) des Verschlusses (11) absorbiert wird, und des Werts T_{IST} der Zeit, die in Bezug auf den Beginn der Verschlussbewegung (11) verstrichen ist,
- Vergleichen der erfassten/berechneten Werte I_{IST} und T_{IST} mit Steuerparametern, die jeweils den vom Aktuator (17) absorbierten Strom zum Bewegen des Verschlusses (11) und die maximale Dauer (T) für die Bewegung des vollständigen Öffnens/Schließens des Verschlusses (11) und/oder die Dauer der Zeitintervalle betreffen, in die die Bewegung des Verschlusses (11) unterteilt ist,
- auf der Grundlage des so durchgeführten Vergleichs, Identifizieren, in welcher Position und/oder in welchem Zustand sich der Verschluss (11) befindet und somit in welcher Phase des Öffnungs-/Schließzyklus sich das entsprechende Ventil befindet.

8. Elektronisches Gerät nach dem vorhergehenden Anspruch, **dadurch gekennzeichnet, dass** sie einen Stromableiter, vorzugsweise einen Widerstand des Shunt-Typs, umfasst, der in Reihe mit einer Stromversorgungseinheit (19) für den Aktuator (17) verbunden ist, und dadurch, dass die Verarbeitungs- und Steuereinheit (21) konfiguriert ist, um den vom Aktuator (17) absorbierten Strom zum Bewegen des Verschlusses (11) durch Messen der Spannung an dem Stromableiter zu erfassen.

9. Elektronisches Gerät nach einem oder mehreren der vorhergehenden Ansprüche, **dadurch gekennzeichnet, dass** die Steuerparameter so ausgewählt sind, dass sie den Ventilöffnungs-/-schlieβzyklus so unterteilen, dass er mindestens die folgenden Phasen beinhaltet:
- eine zweite Phase F₂, die dem Startzustand der Bewegung des Verschlusses entspricht; in dieser zweiten Phase F₂ steigt der Strom schnell an und dabei erreicht einen Spitzenwert und nimmt dann in einem ersten Zeitintervall T_{2A} bis zu einem Stromschwellenwert I₂ und dann in einem zweiten Zeitintervall T_{2B} bis zu dem Stromwert I₃ ab, der dem Stromabsorptionswert während der normalen Bewegung des Verschlusses (11) entspricht,
- eine dritte Phase F₃, die dem Zustand entspricht, in dem sich der Verschluss (11) weiterbewegt; während der dritten Phase F₃ liegt der absorbierte Strom für eine Dauer T₃ im Wesentlichen zwischen I₃ und I_{MIN},
- eine vierte Phase F₄, die dem Zustand entspricht, in dem sich der Verschluss dem Ende seiner Bewegung nähert und mechanisch gegen sein festes Gehäuse zu drücken beginnt, das den Durchgangsabschnitt (12) des Ventils umgibt; während dieser vierten Phase F₄ steigt der Strom schnell an, bis er innerhalb der Zeit T₄ den Maximalwert I_{MAX} erreicht,
- eine fünfte Phase F₅, die dem Zustand entspricht, in dem der Verschluss gegen sein festes Gehäuse sitzt, das den Durchgangsabschnitt (12) umgibt, um so die Abdichtung aufrechtzuerhalten/zu gewährleisten; während dieser fünften Phase F₅ bleibt der absorbierte Strom für eine feste und vordefinierte Zeit T₅ über einem Stromwert I₅, der nahe am Maximalwert I_{MAX}, jedoch niedriger als dieser ist.

10. Elektronisches Gerät nach einem oder mehreren der vorhergehenden Ansprüche, **dadurch gekennzeichnet, dass**:
- in der Verarbeitungs- und Steuereinheit (21) die Charakterisierung (C) mindestens eines Typs von Ventil (1) geladen ist, wobei die Charakterisierung (C) mindestens zwei Gruppen (G) von Steuerparameterwerten umfasst, die für den Vergleich zu verwenden sind,
- die mindestens zwei Gruppen (G) Werte der Steuerparameter umfassen, vorzugsweise relativ zu dem vom Aktuator (17) absorbierten elektrischen Strom und/oder relativ zu den Bewegungszeiten des Verschlusses (11), die während eines Zyklus des Öffnens und/oder des Schließens des Ventils in Abwesenheit von Hindernissen, die die Bewegung blockieren oder behindern können, erfasst wurden und die unter Gastemperaturbetriebszuständen erfasst wurden, die zwischen den mindestens zwei Gruppen (G) unterschiedlich sind.

11. Elektronisches Gerät nach einem oder mehreren der vorhergehenden Ansprüche, **dadurch gekennzeichnet, dass**:
- in der Verarbeitungs- und Steuereinheit (21) die Charakterisierung (C) mindestens eines Typs von Ventil (1) geladen ist, wobei die Charakterisierung (C) mindestens zwei Gruppen (G) von Steuerparameterwerten umfasst, die für den Vergleich zu verwenden sind,
- die mindestens zwei Gruppen (G) Werte der Steuerparameter umfassen, vorzugsweise relativ zu dem vom Aktuator (17) absorbierten elektrischen Strom und/oder relativ zu den Bewegungszeiten des Verschlusses (11), die während eines Zyklus des Öffnens und/oder des Schließens des Ventils in Abwesenheit von Hindernissen, die die Bewegung blockieren oder behindern können, erfasst wurden und die in Betriebszuständen der Gasströmungrate und/oder des Gasdrucks und/oder der Stromversorgungsspannung erfasst wurden, die sich voneinander mindestens zwei Gruppen (G) unterscheiden.

12. Elektronisches Gerät nach einem oder mehreren der vorhergehenden Ansprüche, **dadurch gekennzeichnet, dass** die Verarbeitungs- und Steuereinheit (21) so konfiguriert ist, dass sie die Daten verwendet, die von einem Sensor stammen, der die Gastemperatur und/oder den Gasdruck und/oder die Strömungsrate des Gases detektiert, das durch das Ventil (1) strömt und/oder das durch den Zähler (3) strömt, in dem das Ventil installiert werden soll, und somit auf der Grundlage von Daten unter den verschiedenen Gruppen (G), die gespeichert wurden und zu der Charakterisierung (C) des spezifischen Typs von Ventil gehören, das durch das Gerät (20) gesteuert werden soll, eine spezifische Gruppe (G) von Steuerparameterwerten auswählt, die für den Vergleich verwendet werden sollen.

13. Elektronisches Gerät nach dem vorhergehenden Anspruch, **dadurch gekennzeichnet, dass** die in der Einheit (21) geladene und ausgeführte Software so konfiguriert ist, dass sie ein Gasströmungsignal und/oder ein Signal, das für die Druckdifferenz des stromaufwärtigen Gases und stromabwärts des Ventils (1) repräsentativ ist, als Rückmeldesignal verwendet, um den Zustand/die Position des Verschlusses (11) und damit des Ventils (1) zu korrigieren und/oder zu bestätigen, das auf der Grundlage des vom Aktuator (17) zur Bewegung des Verschlusses (11) absorbierten Stroms und/oder der Bewegungszeit(en) des Verschlusses (11) identifiziert wird.

## Revendications

1. Procédé de commande d'une soupape (1) du type dont le mouvement de son obturateur (11) est commandé par un actionneur électrique ou électromécanique (17), ladite soupape (1) étant destinée à être utilisée et logée, entièrement ou au moins en partie, à l'intérieur du boîtier (2) d'un compteur de gaz (3) pour intercepter, au moins en partie, le flux de gaz à l'entrée et/ou à la sortie de gaz dans/par ledit compteur, dans lequel, dans ledit procédé :
- l'état et/ou la position dudit obturateur (11) est détecté/vérifié sur la base du courant électrique absorbé par ledit actionneur (17) qui provoque le déplacement dudit obturateur (11gv) de la soupape,
- l'état et/ou la position de l'obturateur (11) de ladite soupape (1) est détecté/vérifié sur la base également du temps écoulé depuis le début du déplacement de l'obturateur (11), de préférence en le comparant à la valeur prédéfinie d'un paramètre de commande (T) relatif à la durée maximale du déplacement complet d'ouverture/de fermeture de l'obturateur (11),
ledit procédé est **caractérisé en ce que**, au début du cycle de déplacement de l'obturateur (11), on vérifie si le courant électrique absorbé par l'actionneur (17) est inférieur à une valeur maximale I_{MAX}, mais supérieur à une valeur seuil minimale prédéterminée, pour détecter ainsi si l'obturateur est dans une position d'ouverture ou de fermeture complète de la section de passage.

2. Procédé selon la revendication 1, **caractérisé en ce que** :
- le courant I absorbé par l'actionneur (17) lors du déplacement de l'obturateur (11) dans un cycle d'ouverture/de fermeture de la soupape (1) est mesuré et quantifié,
- la valeur courante ainsi quantifiée et mesurée est corrélée avec l'état et/ou la position de l'obturateur (11) de la soupape (1),
et également **caractérisé en ce que** ladite corrélation entre le courant absorbé par l'actionneur (17) et l'état et/ou la position de l'obturateur (11) de la soupape (1) est effectuée en comparant les valeurs mesurées et/ou calculées du courant absorbé avec la valeur prédéfinie d'au moins un paramètre de commande relatif au courant absorbé, de préférence avec les valeurs prédéfinies de deux ou plusieurs paramètres de commande relatifs au courant absorbé dans le temps par l'actionneur (17), obtenues pendant/au moyen d'au moins un cycle de commande/d'essai d'ouverture/de fermeture qui est effectué dans des conditions connues et prédéfinies sur une soupape du même type qui est utilisée comme référence.

3. Procédé selon l'une ou plusieurs des revendications précédentes, **caractérisé en ce que** :
- au cours d'un cycle d'ouverture/de fermeture de la soupape (1), l'intervalle de temps écoulé depuis le début du déplacement de l'obturateur (11) de la soupape (1) est mesuré et quantifié,
- le temps ainsi mesuré et quantifié est corrélé avec l'état et/ou la position de l'obturateur (11) de la soupape (1),
et également **caractérisé en ce que** ladite corrélation entre les temps de déplacement de l'obturateur (11) et l'état et/ou la position de l'obturateur (11) de la soupape (1) est effectuée en comparant les valeurs mesurées et/ou calculées du temps écoulé depuis le début du déplacement de l'obturateur (11) avec la valeur par défaut d'au moins un paramètre de commande relatif au temps de déplacement de l'obturateur (11) obtenu pendant/à travers au moins un cycle de commande/d'essai d'ouverture/de fermeture qui est effectué dans des conditions connues et prédéfinies sur une soupape du même type qui est utilisée comme référence.

4. Procédé selon l'une ou plusieurs des revendications précédentes, **caractérisé en ce que** :
- au cours d'un cycle d'ouverture/de fermeture de la soupape (1), l'intervalle de temps écoulé depuis le début du déplacement de l'obturateur (11) de la soupape (1) est mesuré et quantifié,
- le courant I absorbé par l'actionneur (17) lors du déplacement de l'obturateur (11) dans un cycle d'ouverture/de fermeture de la soupape (1) est mesuré et quantifié,
- la valeur courante ainsi quantifiée et mesurée est combinée avec l'intervalle de temps ainsi mesuré et quantifié pour déterminer la position dans laquelle se trouve l'obturateur (11) pendant ledit cycle d'ouverture/de fermeture de la soupape elle-même.

5. Procédé selon l'une ou plusieurs des revendications précédentes, **caractérisé en ce que** les temps de déplacement de l'obturateur (11) sont utilisés, en combinaison avec le courant électrique absorbé par l'actionneur (17), pour déterminer si :
- ledit obturateur (11) a atteint une position de fin de course en ouverture ou en fermeture, et
- l'obturateur (11) de la soupape (1) a rencontré un obstacle lors de sa course de déplacement en ouverture ou en fermeture, et/ou si ce déplacement est ralenti d'une manière ou d'une autre.

6. Procédé selon l'une ou plusieurs des revendications précédentes, **caractérisé en ce qu'**il détecte/contrôle l'état et/ou la position de l'obturateur (11) de ladite soupape (1) :
- comparer les valeurs mesurées et/ou calculées du courant absorbé avec les valeurs par défaut d'au moins deux paramètres de commande relatifs au courant absorbé dans le temps par l'actionneur (17), lesdites valeurs par défaut d'au moins deux paramètres de commande relatifs au courant absorbé dans le temps par l'actionneur (17) étant sélectionnées en fonction de la température de gaz et/ou de la soupape (11) détectée au cours du fonctionnement opérationnel de la soupape elle-même, et
- comparer le temps écoulé depuis le début du déplacement de l'obturateur (11) avec la valeur par défaut d'un seul paramètre de commande correspondant à la durée maximale (T) du déplacement d'ouverture/de fermeture complète de l'obturateur (11), ladite valeur par défaut relative à la durée maximale (T) du déplacement d'ouverture/de fermeture complète de l'obturateur (11) étant unique et indépendante de la température du gaz et/ou de la soupape (11) détectée pendant le fonctionnement opérationnel de la soupape elle-même.

7. Appareil électronique (20) pour commander l'ouverture/la fermeture d'une soupape (1) du type dont le déplacement de son obturateur (11) est commandé par un actionneur électrique ou électromécanique (17) relié audit appareil (20), ladite soupape (1) étant destinée à être utilisée et logée, entièrement ou au moins en partie, à l'intérieur du boîtier (2) d'un compteur de gaz (3) afin d'intercepter, au moins en partie, le flux de gaz à l'entrée et/ou à la sortie de gaz dans ledit compteur, ledit appareil électronique (20) comprenant une unité de traitement et de commande (21) qui est programmée pour mettre en œuvre un procédé selon l'une ou plusieurs des revendications précédentes et **caractérisé en ce que** dans l'unité de traitement et de commande (21) est installé et exécuté un logiciel qui est programmé de manière à :
- acquérir/calculer la valeur du courant I_{ACTUAL} absorbé par l'actionneur (17) du déplacement de l'obturateur (11) et la valeur T_{ACTUAL} du temps écoulé par rapport au début du déplacement de l'obturateur (11),
- comparer les valeurs acquises/calculées I_{ACTUAL} et T_{ACTUAL} avec les paramètres de commande relatifs respectivement au courant absorbé par l'actionneur (17) pour déplacer l'obturateur (11) et à la durée maximale (T) du déplacement d'ouverture/de fermeture complète de l'obturateur (11) et/ou à la durée des intervalles de temps dans lesquels le déplacement de l'obturateur (11) est divisé,
- sur la base de la comparaison ainsi effectuée, identifier la position et/ou l'état dans lequel se trouve l'obturateur (11), et donc dans quelle phase du cycle d'ouverture/de fermeture se trouve la soupape correspondante.

8. Appareil électronique selon la revendication précédente, **caractérisé en ce qu'**il comprend un déviateur de courant, de préférence une résistance de type shunt, qui est connecté en série à une unité d'alimentation (19) dudit actionneur (17) et **en ce que** ladite unité de traitement et de commande (21) est configurée pour acquérir le courant absorbé par l'actionneur (17) pour déplacer l'obturateur (11) en mesurant la tension au niveau dudit déviateur de courant.

9. Appareil électronique selon l'une ou plusieurs des revendications précédentes, **caractérisé en ce que** lesdits paramètres de commande sont sélectionnés pour diviser le cycle d'ouverture/de fermeture de la soupape de manière à inclure au moins les phases suivantes :
- une deuxième phase F₂ correspondant à la condition de démarrage du déplacement de l'obturateur ; dans ladite deuxième phase F₂, le courant augmente rapidement jusqu'à un pic puis diminue dans un premier intervalle de temps T_{2A} jusqu'à une valeur seuil de courant I₂ puis dans un second intervalle de temps T_{2B} jusqu'à la valeur de courant I₃ correspondant à la valeur d'absorption de courant lors d'un déplacement normal de l'obturateur(11),
- une troisième phase F₃, correspondant à la condition dans laquelle l'obturateur (11) continue à se déplacer ; pendant ladite troisième phase F₃, le courant absorbé est sensiblement compris entre I₃ et I_{MIN} pendant une durée F₃,
- une quatrième phase F₄, correspondant à la condition dans laquelle l'obturateur approche de la fin de son déplacement et commence à forcer mécaniquement contre son boîtier fixe qui entoure la section de passage (12) de la soupape ; pendant ladite quatrième phase F₄, le courant augmente rapidement jusqu'à ce qu'il atteigne la valeur maximale I_{MAX} dans le temps F₄,
- une cinquième phase F₅, correspondant à l'état dans lequel l'obturateur est assis contre son boîtier fixe qui entoure la section de passage (12) pour ainsi maintenir/garantir l'étanchéité ; pendant ladite cinquième phase F₅, le courant absorbé reste au-dessus d'une valeur de courant I₅, qui est proche mais inférieure à la valeur maximale I_{MAX}, pendant un temps fixe et prédéfini T₅.

10. Appareil électronique selon l'une ou plusieurs des revendications précédentes, **caractérisé en ce que** :
- dans ladite unité de traitement et de commande (21), la caractérisation (C) d'au moins un type de soupape (1) est chargée, ladite caractérisation (C) comprenant au moins deux groupes (G) de valeurs de paramètres de commande à utiliser pour ladite comparaison,
- lesdits au moins deux groupes (G) comprennent des valeurs des paramètres de commande, de préférence relatives au courant électrique absorbé par l'actionneur (17) et/ou relatives aux temps de déplacement de l'obturateur (11), qui ont été acquises au cours d'un cycle d'ouverture et/ou de fermeture de la soupape en l'absence d'obstacles pouvant bloquer ou gêner ledit déplacement, et qui ont été acquises dans des conditions de fonctionnement à la température du gaz différentes entre lesdits au moins deux groupes (G).

11. Appareil électronique selon l'une ou plusieurs des revendications précédentes, **caractérisé en ce que** :
- dans ladite unité de traitement et de commande (21), la caractérisation (C) d'au moins un type de soupape (1) est chargée, ladite caractérisation (C) comprenant au moins deux groupes (G) de valeurs de paramètres de commande à utiliser pour ladite comparaison,
- lesdits au moins deux groupes (G) comprennent des valeurs des paramètres de commande, de préférence relatives au courant électrique absorbé par l'actionneur (17) et/ou relatives aux temps de déplacement de l'obturateur (11), qui ont été acquises au cours d'un cycle d'ouverture et/ou de fermeture de la soupape en l'absence d'obstacles pouvant bloquer ou gêner ledit déplacement, et qui ont été acquises dans des conditions de fonctionnement de débit de gaz et/ou de pression de gaz et/ou de tension d'alimentation électrique différentes l'une de l'autre d'au moins deux groupes (G).

12. Appareil électronique selon l'une ou plusieurs des revendications précédentes, **caractérisé en ce que** ladite unité de traitement et de commande (21) est configurée pour utiliser les données provenant d'un capteur qui détecte la température de gaz et/ou la pression de gaz et/ou le débit de gaz qui passe à travers la soupape (1) et/ou qui passe à travers le compteur (3) dans lequel ladite soupape est destinée à être installée, et sélectionne ainsi, sur la base desdites données, parmi les différents groupes (G) mémorisés et appartenant à la caractérisation (C) du type spécifique de soupape destiné à être commandé par ledit appareil (20), un groupe spécifique (G) de valeurs de paramètres de commande à utiliser pour ladite comparaison.

13. Appareil électronique selon la revendication précédente, **caractérisé en ce que** le logiciel chargé et exécuté dans ladite unité (21) est configuré de manière à utiliser un signal de débit de gaz et/ou un signal représentatif de la différence de pression du gaz en amont et en aval de la soupape (1) comme signal de retour pour corriger et/ou confirmer l'état/la position de l'obturateur (11), et donc de la soupape (1), qui est identifié sur la base du courant absorbé par l'actionneur (17) de déplacement de l'obturateur (11) et/ou du/des temps de déplacement de l'obturateur (11).
